(19) Europäisches Patentamt / European Patent Office / Office européen des brevets

(11) **EP 3 189 379 B1**

(12) **FASCICULE DE BREVET EUROPEEN**

(45) Date de publication et mention de la délivrance du brevet:
**01.04.2020 Bulletin 2020/14**

(21) Numéro de dépôt: **15762965.0**

(22) Date de dépôt: **03.09.2015**

(51) Int Cl.:
*G04C 3/14* $^{(2006.01)}$      *H02P 8/02* $^{(2006.01)}$

(86) Numéro de dépôt international:
**PCT/EP2015/070182**

(87) Numéro de publication internationale:
**WO 2016/034685 (10.03.2016 Gazette 2016/10)**

(54) **CIRCUIT DETECTEUR DE CHOCS**

AUFPRALLDETEKTIONSSCHALTUNG

SHOCK-DETECTING CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2014 EP 14183786**

(43) Date de publication de la demande:
**12.07.2017 Bulletin 2017/28**

(73) Titulaire: **EM Microelectronic-Marin SA 2074 Marin (CH)**

(72) Inventeurs:
• **GODAT, Yves
2087 Cornaux (CH)**
• **JEANNET, Nicolas
2019 Chambrelien (CH)**

(74) Mandataire: **Giraud, Eric et al
ICB
Ingénieurs Conseils en Brevets SA
Faubourg de l'Hôpital 3
2001 Neuchâtel (CH)**

(56) Documents cités:
**EP-A1- 1 693 720      EP-A1- 2 249 214
FR-A1- 2 426 999      US-A1- 2014 239 874**

## EP 3 189 379 B1

**Description**

La présente invention concerne un dispositif électronique comprenant une unité de calcul capable de générer un signal représentatif d'une grandeur physique, d'un moteur entraînant un dispositif d'affichage, ledit moteur comprenant deux bornes, positive et négative, par lesquelles l'unité de calcul le commande, le dispositif électronique comprenant en outre au moins un circuit de détection de chocs connecté entre l'unité de calcul et une borne du moteur pour la détection d'un choc externe appliqué au moteur.

ARRIERE PLAN TECHNOLOGIQUE

Il est connu des pièces d'horlogeries comprenant un boitier dans lequel un mouvement d'horlogerie électromécanique est agencé. Un tel mouvement est cadencé par un système oscillateur à quartz. Pour l'affichage des indications horaires telles que l'heure et la seconde, des aiguilles sont montées sur des moteurs pour être entraînées en rotation. Les moteurs utilisés sont des moteurs de type Lavet appelés aussi moteurs pas à pas. Dans ces moteurs, un rotor aimanté de forme cylindrique crée un champ magnétique radial dans l'entrefer d'un circuit magnétique sur lequel est enroulée une bobine dont les bornes sont connectées à un circuit de commande, généralement un circuit intégré, fournissant des impulsions de courant, chaque impulsion faisant avancer le rotor d'un pas. La bobine est constituée par un fil très fin enroulé sur un tube isolant creux contenant à l'intérieur une partie du circuit magnétique.

Ces moteurs situés dans la montre subissent des chocs pouvant venir de chutes de la montre ou encore de mouvements violents de l'utilisateur. Ces chocs sont alors susceptibles de perturber le fonctionnement des moteurs. Ces perturbations consistent en un déplacement non contrôlé du ou des rotors dû à leur inertie provoquant le saut d'au moins un pas.

Par conséquent, les indications horaires fournies par les aiguilles risquent de ne plus être exactes.

Pour remédier à cela, il existe des systèmes de détection de chocs. Pour cela, un dispositif électronique se charge de mesurer la tension induite par le moteur lors du choc. En effet, sous l'effet de l'inertie du rotor, une tension induite est générée. Cette tension induite est détectée par un circuit de détection qui compare cette tension induite à un seuil prédéterminé. Si celle tension est supérieure audit seuil, le circuit de détection en déduit qu'un choc est survenu et transmet l'information à une unité de commande.

En réponse à ce choc, l'unité de commande envoie audit moteur une impulsion de blocage utilisée pour bloquer la rotation du rotor due au choc.

Or, pour la mesure de la tension induite, un inverseur sous une tension régulée est utilisé. Afin d'augmenter la sensibilité, la bobine du moteur est court-circuitée pendant un court instant augmentant ainsi la tension aux bornes de la bobine du moteur grâce à l'effet self du moteur delta(U)=L*(di/dt) et automatiquement le courant augmente. Une telle augmentation peut entraîner l'apparition de dégâts.

On connaît également le document US2014/0239874 A1, qui décrit un dispositif selon le préambule de la revendication 1.

RESUME DE L'INVENTION

L'invention a pour but de pallier les inconvénients de l'art antérieur en proposant de fournir un dispositif de détection de chocs d'un moteur permettant une détection d'un choc de manière plus rapide et plus précise.

A cet effet, la présent invention concerne un dispositif électronique tel que défini dans la revendication indépendante 1.

Un avantage de cette invention est qu'elle permet la détection de niveaux positifs ou négatifs.

Dans un premier mode de réalisation avantageux, le dispositif électronique comprend deux circuits de détection de chocs connectés chacun entre l'unité de calcul et une borne du moteur pour la détection d'un choc externe appliqué au moteur, un circuit de détection de chocs étant connecté à la borne positive alors que l'autre est connecté à la borne négative.

Dans un deuxième mode de réalisation avantageux, la partie de sélection comprend en outre un transistor d'activation en série de la série de résistance (Ri) permettant l'activation ou la désactivation dudit circuit de détection de chocs.

Dans un autre mode de réalisation avantageux, la tension de référence prédéterminée est connectée à la borne négative de la partie comparaison.

Dans un autre mode de réalisation avantageux, la tension de référence prédéterminée est négative ou positive.

Dans un autre mode de réalisation avantageux, la partie comparaison comporte une première paire et une seconde paire de transistors montés en série, chaque paire comprenant un transistor de type P et un transistor de type N, les grilles des transistors de même type étant reliées ensembles, les grilles des transistors de type P étant connectées à une source de courant, la grille du transistor de type N de la première paire étant connectée à son drain, les drains des transistors de type P étant connectés à une tension d'alimentation (Vdd), la source du transistor de type n de la première paire étant connectée à la sortie de la partie de sélection alors que le drain du transistor de type n de la seconde paire est connecté à la masse.

## BREVE DESCRIPTION DES FIGURES

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :

- La figure 1 représente un schéma du dispositif électronique selon l'invention;
- Les figures 2 et 6 représentent une vue schématique du dispositif électronique selon l'invention;
- Les figures 3 et 5 représentent une vue détaillée d'un circuit de détection de chocs selon l'invention et d'une de ses variantes;
- La figure 4 représente des diagrammes de fonctionnement du dispositif électronique selon l'invention.

## DESCRIPTION DETAILLEE

La présente invention procède de l'idée générale de fournir un dispositif de détection de chocs d'un moteur permettant une détection d'un choc de manière plus rapide et plus précise.

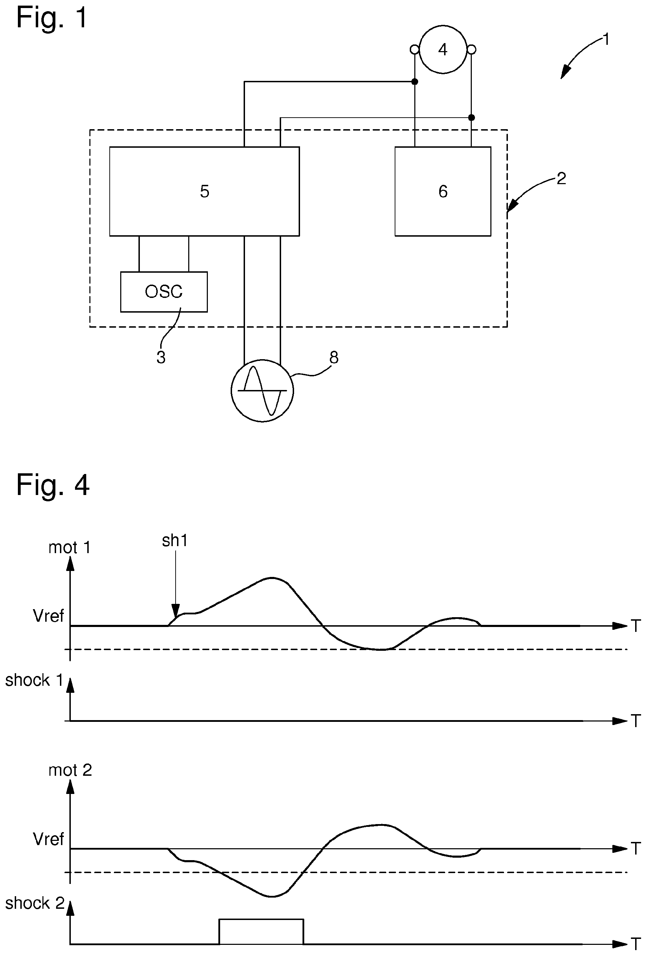

Sur la figure 1 est représentée une vue schématique d'un mouvement électronique. Ce mouvement ou dispositif électronique 1 comprend un module de commande 2 cadencé par un système oscillateur 3 à quartz. Pour l'affichage des indications horaires telles que l'heure et la seconde, des aiguilles sont montées sur des moteurs 4 pour être entraînées en rotation. Les moteurs utilisés sont des moteurs Lavet appelés aussi moteurs pas à pas et comprennent deux bornes de connexion Mot1, Mot2. Dans ces moteurs, un rotor 4a aimanté de forme cylindrique crée un champ magnétique radial dans l'entrefer d'un circuit magnétique 4b sur lequel est enroulée une bobine dont les bornes sont connectées au module de commande, généralement un circuit intégré, fournissant des impulsions de courant, chaque impulsion faisant avancer le rotor d'un pas. La bobine est constituée par un fil très fin enroulé sur un tube isolant creux contenant à l'intérieur une partie du circuit magnétique. Ce module de commande 2 comprend généralement une unité de calcul 5. Le tout est alimenté par une unité d'alimentation 8 telle une pile ou une batterie. Cette unité d'alimentation fournit une tension d'alimentation Vdd. Une masse Vss est également prévue.

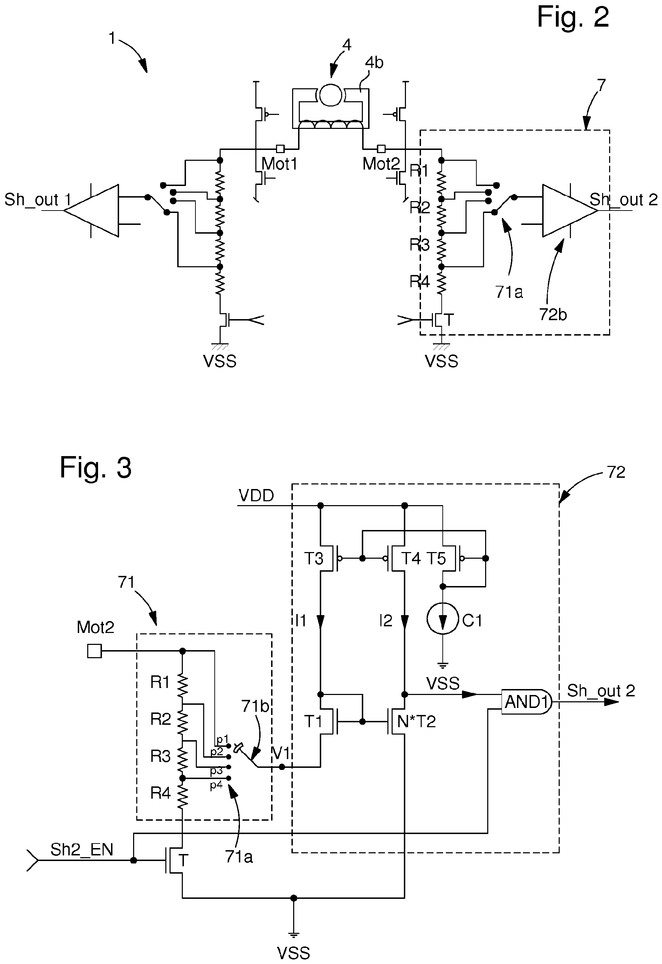

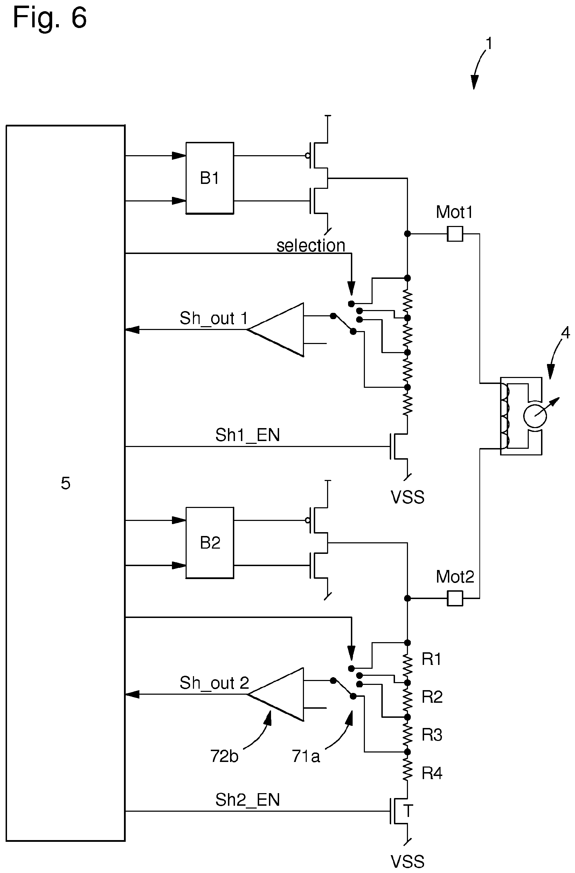

Avantageusement selon l'invention, le module de commande 2, visible à la figure 2, comprend en outre une unité de détection 6 comprenant au moins un circuit de détection de chocs 7. Ce circuit de détection de chocs 7 est utilisé afin de déterminé si un choc est apparu. Ainsi, si un choc est détecté, le module de commande 2 peut agir en conséquence et envoyé une impulsion de blocage pour empêcher le rotor d'entrer en rotation. Le circuit de détection de chocs est placé en sortie d'au moins une des bornes du moteur. Dans la suite de la description, l'exemple d'un circuit de détection de chocs 7 connecté à la borne négative Mot2 du moteur sera pris. A chaque borne Mot1, Mot2 du moteur, une tension Vmot est mesurée. Au niveau de chaque borne Mot1, Mot2, un buffer moteur est agencé, ces buffers moteurs comprennent une bascule B1, B2 et deux transistors de type différent montés en série, les grilles de ces transistors étant connectées à la bascule comme visible à la figure 6. Ces buffers servent à faire passer un courant soit positif, soit négatif dans la bobine du moteur afin de le faire tourner.

A la figure 2, on constate que le circuit de détection de chocs 7 comprend une partie de sélection 71 connectée directement à la borne Mot 2 du moteur 4. Cette partie de sélection 71 possède une sortie connectée à une partie de comparaison 72. Cette partie de comparaison 72 est connectée à l'unité de calcul 5 de sorte à fournir le signal indiquant si un choc est détecté ou pas.

A la figure 3, une représentation détaillée de l'unité de détection est représentée.

La partie de sélection comprend une série de résistance Ri connectées en série. La première de ces résistances Ri est connectée à la borne de connexion du moteur 4 alors que la dernière résistance Ri de la série est connectée à une borne d'un transistor T, plus particulièrement à son drain. De préférence, la série de résistances Ri comprendra quatre résistances R1, R2, R3 et R4.

Ce transistor T voie sa source connectée à la masse Vss et sa grille connectée à l'unité de calcul 5 du module de commande 2. Ce transistor T est utilisé pour activer ou désactiver le circuit de détection de chocs 7. En effet, selon la tension d'un signal Shi_EN appliqué sur la grille de ce transistor, celui-ci sera ouvert ou fermé. Dans le cas où il est ouvert, ce transistor T empêche le circuit de détection de chocs 7 de fonctionner car le circuit électrique est ouvert et inversement. Pour le circuit de détection connecté à la borne Mot1 du moteur, le signal Sh1_EN permettra d'activer ou de désactiver ce circuit de détection de chocs 7. Pour le circuit de détection connecté à la borne Mot2 du moteur, le signal Sh2_EN permettra d'activer ou de désactiver ce circuit de détection de chocs 7.

La partie sélection 71 comprend en outre un sélecteur 71a se présentant sous la forme d'un interrupteur multi-position. Ce sélecteur 71a comporte une sortie V1 et une pluralité de points de sélection pi, chacun étant associé à une résistance Ri. Le premier point de sélection p1 est associé à la résistance R1 au niveau de la borne de la résistance R1 reliée au moteur. Le second point de sélection p2 est associé à la résistance R2 au niveau de la borne de la résistance R2 reliée à la résistance R2 et ainsi de suite.

Le sélecteur 71a comporte en outre une bascule 71b permettant de connecter la sortie du sélecteur avec un des points de sélection pi. La sortie du sélecteur 71a est la tension V1 qui est connectée à la partie de comparaison 72. Cette partie de comparaison 72 comprend un comparateur dont l'entrée positive est reliée à la sortie du sélecteur 71a et dont l'entrée négative est reliée à la grille du transistor T permettant l'activation ou la désactivation du circuit de détection de chocs 7. On comprend alors que le signal appliqué à la grille dudit transistor T est un signal digital dont la tension sera la tension d'alimentation Vdd ou la masse Vss et qu'il permet l'enclenchement du comparateur.

Le comparateur 72b de la partie comparaison 72 est composé d'un premier T1 et d'un second T2 transistor de type N dont les grilles sont reliées ensemble. La source du premier transistor T1 est connectée à la sortie du sélecteur 71a alors que la grille du premier transistor T1 est reliée à son drain. La source du second transistor de type N T2 est connectée à la masse et à la source du transistor T de la partie sélection 71a.

Les drains du premier transistor T1 et du second transistor T2 sont respectivement connectés au drain du troisième transistor T4 et au drain du quatrième transistor T4, le troisième transistor T3 et le quatrième transistor T4 étant du type P. Les transistors T3 et T4 ont leurs grilles connectées ensemble et leurs drains connectés à la tension d'alimentation Vdd. Le transistor T3 fournit un courant I1 et le transistor T4 fournit un courant I2.

Le comparateur de la partie comparaison comprend en outre une source de courant C1 connectée en série avec un cinquième transistor T5, de type P. Le drain du cinquième transistor T5 est connecté à la tension d'alimentation Vdd alors que la grille de ce transistor T5 est connectée à sa source et aux grilles des transistors T3 et T4.

Il est prévu que les transistors T3 et T4 soient identiques de sorte que le courant I1 soit identique au courant I2.

Les transistors T1 et T2 sont de mêmes dimensions et sont agencés pour être en faible inversion. Toutefois, il est prévu que le transistor T2 soit placé un nombre N de fois en parallèle. Le transistor T2 est donc composé d'un nombre N de transistors connectés en parallèle.

Cette partie comparaison comprend en outre une porte logique ET appelé AND1 ayant deux entrées : une première étant connectée au drain du transistor T2 alors que la deuxième entrée est connectée à la grille du transistor T de la partie sélection.

En mode faible inversion, l'équation d'un transistor est :

$$I = Is \times e^{(Vgs/(n \times Ut))} => Vgs = n \times Ut \times \ln(\frac{I}{Is})$$

Par conséquent, on en déduit donc que :

$$Vgs1 = n \times Ut \times \ln(\frac{I1}{Is1})$$

(avec n= 1 ou 2 suivant la technologie.)

$$Vgs2 = n \times Ut \times \ln(\frac{I2/N}{Is2}).$$

On obtient donc :

$$V1 = Vgs2 - Vgs1 = n \times Ut \times (\ln\left(\frac{\frac{I2}{N}}{Is2}\right) - \ln\left(\frac{I1}{Is1}\right)) = n \times Ut \times \ln((I2/N)/$$

$$Is2) \times (Is1/I1))$$

Sachant qu'au point de commutation I1=I2 et Is1 = Is2, on obtient alors :

$$Vref = V1 = n \times Ut \times \ln(1/N) \text{ avec } Ut = (k \times T)/q$$

Or, si N est supérieur à 1, 1/N est inférieur à 1. De ce fait, ln(1/N) est égal à -ln(N). On comprend donc par-là que la tension V1 dont la valeur est Vref est négative et le circuit de détection de chocs 7 est ainsi apte à mesurer une tension en dessous de 0V.

Selon la position du sélecteur, la valeur Vcomp de la tension Vmot est modifiée par l'unité de calcul 5 comme visible à la figure 6. La tension comparée Vcomp se calcule, au point de commutation, de la façon suivante :

Si le sélecteur est en position p1, la tension Vcomp est égale à la tension V1.

Si le sélecteur est en position p2, la tension Vcomp est égale à :

$$Vcomp = Vref \times \left(\frac{R1+R2+R3+R4}{R2+R3+R4}\right)$$

Si le sélecteur est en position p3, la tension Vcomp est égale à :

$$Vcomp = Vref \times \left(\frac{R1+R2+R3+R4}{R3+R4}\right)$$

Si le sélecteur est en position p4, la tension Vcomp est égale à :

$$Vcomp = Vref \times \left(\frac{R1+R2+R3+R4}{R4}\right)$$

Par conséquent, la tension au point de sélection P4 est plus importante que la tension au point de sélection P1.

A titre d'exemple, les résistances pourraient avoir les valeurs suivantes : R1=5000 Ohms, R2=3000 Ohms, R3=2000 Ohms et R4=1000 Ohms. On obtient alors Vcomp variant de V1 à 11×V1.

Ces valeurs de Vref et de Vcomp sont alors considérées comme des valeurs de référence.

La valeur de la tension induite dépend du type de moteur, de l'intensité et de la durée du choc. Le but de ce système est de mesurer des tensions induites entre 50 mV peak-peak et ~500mV peak-peak.

Dans une variante visible aux figures 2 et 6, chaque borne Mot1, Mot2 du moteur présente un circuit de détection de chocs 7. Cette variante permet ainsi la détection de chocs horaire ou antihoraire.

Soit l'exemple de la figure 4 dans laquelle chaque borne Mot1, Mot2 du moteur présente un circuit de détection de chocs, chaque détecteur étant configuré avec une tension de référence négative.

Lors d'un choc Sh1 appliqué sur le moteur, une tension induite est générée par le mouvement du rotor du moteur 4, la valeur de la tension Vmot augmente donc.

Sur la figure 4, on constate que le choc Sh1 entraîne l'apparition d'une tension induite positive au niveau de la borne Mot1 et l'apparition d'une tension induite négative au niveau de la borne Mot2. On en déduit donc que le choc est horaire.

La tension induite détectée au niveau de la borne Mot1 et la tension détectée au niveau de la borne Mot2 sont comparées à la tension de référence négative. On remarque dans le cas de la figure 4, que la tension induite détectée au niveau de la borne Mot2 dépasse le seuil de référence c'est-à-dire qu'elle est plus importante que la tension de référence négative. On comprend alors ici que la valeur de la tension V1 devient plus négative que la valeur Vref de la tension V1 et que la valeur de la tension Vmot devient plus négative que la valeur Vmot. Dans ce cas, la sortie digitale du comparateur Sh_out1 passe à 1 indiquant alors la présence d'un choc. Cette information est envoyée à l'unité de calcul 5 qui va agir en conséquence, par exemple en envoyant une impulsion de blocage pour stopper la rotation du rotor. Au contraire, si la valeur de la tension V1 ne devient pas plus négative que la valeur Vref de la tension V1, la valeur de la tension Vmot ne devient pas plus négative que la valeur Vmot, la sortie digitale du comparateur reste à 0

On comprendra que le seuil de référence c'est-à-dire la tension de référence pourra également être positive. De cette façon, un choc horaire sera détecté via la borne Mot1 alors qu'un choc antihoraire sera détecté sur la borne Mot2.

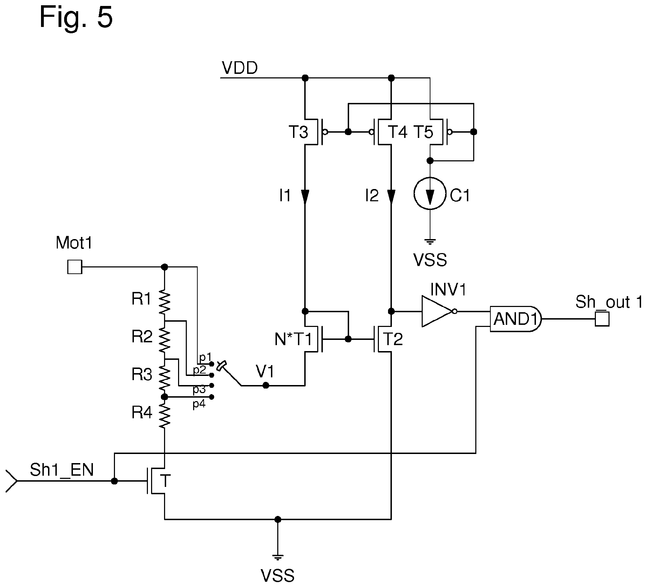

Dans ce cas-là, le comparateur visible à la figure 5 est digitalement inversé de sorte que si la valeur de la tension V1 devient plus positive que la valeur Vref de la tension V1, la valeur de la tension Vmot devient plus positive que la valeur Vmot permettant à la sortie Sh_out2 du comparateur de passer à 1.

On constate donc à la figure 5 que la partie de comparaison 72 comprend en outre un inverseur INV1 placé entre le transistor T2 et la porte ET appelée AND1. De plus, ce circuit de détection 7 avec seuil de référence positif se distingue en ayant le transistor T1 composé d'une multitude de transistors connectés en parallèle alors que le transistor T2 est unique.

La présente invention permet donc la détection de niveaux positifs ou négatifs.

On comprendra que diverses modifications et / ou améliorations évidentes pour l'homme du métier peuvent être apportées aux différents modes de réalisation de l'invention décrits dans la présente description sans sortir du cadre de l'invention, telle que définie par les revendications.

**Revendications**

1. Dispositif électronique (1) comprenant une unité de calcul (5) capable de générer un signal représentatif d'une grandeur physique, d'un moteur (4) entraînant un dispositif d'affichage, ledit moteur comprenant deux bornes (Mot1, Mot2), positive et négative, par lesquelles l'unité de calcul le commande, le dispositif électronique comprenant en outre au moins un circuit convenant à la détection de chocs (7) connecté entre l'unité de calcul et une borne du moteur pour la détection d'un choc externe appliqué au moteur susceptible de déplacer un rotor (4a) du moteur, **caractérisé en ce que** le circuit convenant à la détection de chocs comprend une partie de sélection (71) connectée directement à une des bornes du moteur, afin de faire varier une tension induite générée au niveau du moteur suite à un choc avec un déplacement du rotor pour améliorer la sensibilité dudit circuit détecteur de chocs, et une partie comparaison (72) munie d'une entrée positive et d'une entrée négative et reliée à la partie de sélection (71) pour comparer un signal de sortie (V1) de la partie de sélection (71) à une tension de référence prédéterminée, et **en ce que** la partie de sélection (71) comprend une série de résistances (Ri) connectées en série, la première de ces résistances étant connectée à la borne de connexion du moteur (Mot1, Mot2), alors que la dernière résistance de la série est connectée à la masse (Vss), la partie de sélection comprenant en outre un sélecteur (71a) comportant une sortie (V1) reliée à ladite entrée positive de la partie comparaison (72) et une pluralité de points de sélection (pi), chacun étant associé à une résistance Ri.

2. Dispositif électronique selon la revendication 1, **caractérisé en ce que** le dispositif électronique comprend deux circuits convenant à la détection de chocs (7) connectés chacun entre l'unité de calcul (5) et une borne du moteur pour la détection d'un choc externe appliqué au moteur, un circuit convenant à la détection de chocs (7) étant connecté à la borne positive (Mot1) alors que l'autre est connecté à la borne négative (Mot2).

3. Dispositif électronique selon la revendication 1, caractérisé en que la partie de sélection comprend en outre un transistor d'activation (T) en série de la série de résistance (Ri) permettant l'activation ou la désactivation dudit circuit de détection de chocs

4. Dispositif électronique selon la revendication 1, caractérisé en que la tension de référence prédéterminée (Vref) est connectée à la borne négative de la partie comparaison.

5. Dispositif électronique selon l'une des revendications 1 à 4, caractérisé en que la tension de référence prédéterminée (Vref) est négative ou positive.

6. Dispositif électronique selon l'une des revendications 1 à 5, caractérisé en que la partie comparaison comporte une première parie (T3, T1) et une seconde paire (T4, T2) de transistors montés en série, chaque paire comprenant un transistor de type P et un transistor de type N, les grilles de des transistors de même type étant reliées ensembles, les grilles des transistors de type P étant connectées à une source de courant (C1), la grille du transistor (T1) de type N de la première paire étant connectée à son drain, les drains des transistors (T3, T4) de type P étant connectés à une tension d'alimentation (Vdd), la source du transistor (T1) de type N de la première paire étant connectée à la sortie de la partie de sélection alors que le drain du transistor (T2) de type N de la seconde paire est connecté à la masse.

**Patentansprüche**

1. Elektronische Vorrichtung (1), umfassend eine Recheneinheit (5), die geeignet ist, ein repräsentatives Signal einer physikalischen Größe für einen Motor (4) zu erzeugen, der eine Anzeigevorrichtung antreibt, wobei der Motor zwei Anschlüsse (Mot1, Mot2) aufweist, positiv und negativ, über die ihn die Recheneinheit steuert, wobei die elektronische Vorrichtung ferner mindestens eine Stoß-Detektionsschaltung (7) aufweist, die zwischen die Recheneinheit und einem Anschluss des Motors geschaltet ist, um einen externen Stoß zu erfassen, der auf den Motor ausgeübt wird und in der Lage ist, einen Rotor (4a) des Motors zu verschieben, **dadurch gekennzeichnet, dass** die Stoß-Detektionsschaltung einen direkt mit einem der Anschlüsse des Motors verbundenen Auswahlabschnitt (71) umfasst, um eine am Motor infolge eines Stoßes mit einer Rotorverschiebung erzeugte induzierte Spannung zu variieren, um die Empfindlichkeit der besagten Stoß-Detektionsschaltung zu verbessern, und einen Vergleichsabschnitt (72) umfasst, der mit einem positiven Eingang und einem negativen Eingang versehen und mit dem Auswahlabschnitt (71) verbunden ist, um ein Ausgangssignal (V1) des Auswahlabschnitts (71) mit einer vorbestimmten Referenzspannung zu vergleichen,

und dadurch, dass der Auswahlabschnitt (71) eine Reihe von in Reihe geschalteten Widerständen (Ri) umfasst, wobei der erste dieser Widerstände mit dem Verbindungsanschluss des Motors (Mot1, Mot2) verbunden ist, während der letzte Widerstand der Reihe mit der Masse (Vss) verbunden ist, wobei der Auswahlabschnitt ferner eine Auswahlvorrichtung (71a) umfasst, die einen mit dem positiven Eingang des Vergleichsabschnitts (72) verbundenen Ausgang (V1) und mehrere Auswahlpunkte (pi) aufweist, welche jeweils einem Widerstand Ri zugeordnet sind.

2. Elektronische Vorrichtung nach Anspruch 1, **dadurch gekennzeichnet, dass** die elektronische Vorrichtung zwei Stoß-Detektionsschaltungen (7) umfasst, die jeweils zwischen der Recheneinheit (5) und einem Anschluss des Motors angeschlossen sind, um einen auf den Motor ausgeübten externen Stoß zu erfassen, wobei eine Stoß-Detektionsschaltung (7) mit dem positiven Anschluss (Mot1) verbunden ist, während die andere mit dem negativen Anschluss (Mot2) verbunden ist.

3. Elektronische Vorrichtung nach Anspruch 1, **dadurch gekennzeichnet, dass** der Auswahlabschnitt ferner einen Aktivierungstransistor (T) umfasst, der in Reihe geschaltet ist mit der Reihe von Widerständen (Ri), und der die Aktivierung oder Deaktivierung der Stoß-Detektionsschaltung ermöglicht.

4. Elektronische Vorrichtung nach Anspruch 1, **dadurch gekennzeichnet, dass** die vorbestimmte Referenzspannung (Vref) mit dem negativen Anschluss des Vergleichsabschnitts verbunden ist.

5. Elektronische Vorrichtung nach einem der Ansprüche 1 bis 4, **dadurch gekennzeichnet, dass** die vorgegebene Referenzspannung (Vref) negativ oder positiv ist.

6. Elektronische Vorrichtung nach einem der Ansprüche 1 bis 5, **dadurch gekennzeichnet, dass** der Vergleichsabschnitt ein erstes Paar (T3, T1) und ein zweites Paar (T4, T2) von in Reihe geschalteten Transistoren umfasst, wobei jedes Paar einen Transistor vom Typ P und einen Transistor vom Typ N umfasst, die Gates der Transistoren desselben Typs miteinander verbunden sind, die Gates der Transistoren vom Typ P mit einer Stromquelle (C1) verbunden sind, das Gate des Transistors vom Typ N (T1) des ersten Paares mit seinem Drain verbunden ist, die Drains der Transistoren vom Typ P (T3, T4) mit einer Versorgungsspannung (Vdd) verbunden sind und die Source des Transistors vom Typ N (T1) des ersten Paares mit dem Ausgang des Vergleichsabschnitts verbunden ist, während der Drain des Transistors vom Typ N (T2) des zweiten Paares mit der Masse verbunden ist.

**Claims**

1. Electronic device (1) comprising a calculation unit (5) capable of generating a signal representative of a physical value, for a motor (4) driving a display device, said motor comprising two terminals, one positive and one negative (Mot1, Mot2), via which the calculation unit controls the motor, the electronic device further comprising at least one circuit suitable for shock detection (7) connected between the calculation unit and one terminal of the motor for the detection of an external shock applied to the motor capable of moving a rotor (4a) of the motor,

**characterized in that** the circuit suitable for shock detection includes a selection part (71) directly connected to one of the motor terminals, in order to vary an induced voltage generated in the motor following a shock with a movement of the rotor to improve the sensitivity of said shock detector circuit, and a comparison part (72) provided with a positive input and a negative input, and connected to the selection part (71) for comparing an output signal (V1) from the selection part (71) to a predetermined reference voltage, and

**in that** the selection part (71) comprises a series of series connected resistors (Ri), the first of these resistors being connected to the motor connection terminal (Mot1, Mot2), whereas the last resistor of the series is connected to earth (Vss), the selection part further comprising a selector (71a) including an output (V1) connected to said positive input of the comparison part (72) and a plurality of selection points (pi), each connected to one resistor Ri.

2. Electronic device according to claim 1, **characterized in that** the electronic device comprises two circuits suitable for shock detection (7) each connected between the calculation unit (5) and one terminal of the motor for detection of an external shock applied to the motor, one circuit suitable for shock detection (7) being connected to the positive terminal (Mot1) whereas the other is connected to the negative terminal (Mot2).

3. Electronic device according to claim 1, **characterized in that** the selection part further comprises an activation transistor (T) in series with the series of resistors (Ri) for activating or deactivating said shock detection circuit.

4. Electronic device according to claim 1, **characterized in that** the predetermined reference voltage (Vref) is connected to the negative terminal of the comparison part.

5. Electronic device according to any of claims 1 to 4, **characterized in that** the predetermined reference voltage (Vref) is negative or positive.

6. Electronic device according to any of claims 1 to 5, **characterized in that** the comparison part includes a first pair (T3, T1) and a second pair (T4, T2) of series connected transistors, each pair comprising one p-type transistor and one n-type transistor, the gates of the transistors of the same type being connected together, the gates of the p-type transistors being connected to a current source (C1), the gate of the n-type transistor (T1) of the first pair being connected to the drain thereof, the drains of the p-type transistors (T3, T4) being connected to a supply voltage (Vdd), the source of the n-type transistor (T1) of the first pair being connected to the output of the selection part, whereas the drain of the n-type transistor (T2) of the second pair is connected to earth.

Fig. 1

Fig. 4

Fig. 2

Fig. 3

# Fig. 5

# Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140239874 A1